Europäisches Patentamt

European Patent Office

Office européen des brevets

(19)

(11) Numéro de publication: **0 002 398**

**A1**

(12) **DEMANDE DE BREVET EUROPEEN**

(21) Numéro de dépôt: **78400163.8**

(22) Date de dépôt: **06.11.78**

(51) Int. Cl.²: **H 02 B 13/02**

(30) Priorité: **30.11.77 FR 7736917**

(43) Date de publication de la demande:
**13.06.79 Bulletin 79/12**

(84) Etats contractants désignés:
**BE CH DE GB NL SE**

(71) Demandeur: **Ridoux, Jacques**
**5, Boulevard Maginot**
**F-77300 Fontainebleau(FR)**

(72) Inventeur: **Ridoux, Jacques**
**5, Boulevard Maginot**
**F-77300 Fontainebleau(FR)**

(74) Mandataire: **Lemoine, Jean**
**Cabinet Lemoine Abreveta 145, rue du Molinel**
**F-59800 Lille(FR)**

(54) **Perfectionnements aux cellules de distribution de courant.**

(57) L'invention concerne des cellules avec des transformateurs de mesure 34, sectionneurs 32, appareil de coupure 33, lesdites cellules étant constituées dans un espace prismatique susceptible d'être ouvert sur un côté.

Les cellules sont caractérisées par le fait que l'on prévoit d'introduire perpendiculairement à l'axe de l'espace prismatique, des blocs isolants de fonction

1) constituant des cloisons infranchissables, par des corps physiques, solides, liquides ou gazeux ainsi que par des arcs électriques partant de pièces non isolées sous tension.

2) comprenant chacun noyé dans une matière isolante, les divers appareils propres auxdites cellules de distribution de courant.

3) présentant sur la partie avant, accessible, ou "façade" des manettes de commande et de l'isolement.

Application aux alimentations haute tension.

Fig. 2

EP 0 002 398 A1

0002398

- 1 -

<u>Perfectionnements aux cellules de distribution de courant.</u>

<u>Domaine technique.</u>

La présente invention concerne des perfectionnements aux cellules de distribution de courant haute tension à partir d'un jeu de barres et comportant divers appareils propres aux cellules, notamment des transformateurs de mesure de courant et de tension, un sectionneur, un appareil de coupure, en particulier un disjoncteur ou un interrupteur ou un contacteur à coupure dans un gaz, chacun de ces appareils réalisant une fonction complète déterminée, lesdites cellules étant constituées dans un espace prismatique susceptible d'être ouvert sur un côté, et où le courant transite perpendiculairement aux bases.

<u>Etat de la technique antérieure.</u>

L'expansion des réseaux de distribution électrique moyenne-tension, et la généralisation de l'emploi de moteurs alimentés sous une tension 3 à 6 KV ont entraîné un développement important des armoires d'appareillage moyenne-tension sous enveloppe métallique fermée, regroupant dans un certain nombre de cellules élémentaires propres à chaque ligne ou câble départ ou arrivée, branchées sur un jeu de barres commun, les organes de coupure, de protection, de mesure correspondant à savoir

...s disjoncteurs, interrupteurs, contacteurs, sectionneurs, ...sibles, transformateurs de courant, transformateurs de ten-...on, relayages. Ces dispositions avaient été prévues dans ...= brevet allemand 917 621 (SIEMENS).

...ar ailleurs, le volume propre d'une cellule est un facteur ...portant de son prix de revient, surtout si le poste est logé ...ans un bâtiment. On est arrivé, ces derniers temps, à réduire ...= volume propre de chacun des organes constitutifs énumérés ...-dessus, tout en en accroissant le niveau de performance, ...ce au progrès de la technologie, et bien que l'on ait sou-...t recours à des barrières isolantes, les dimensions d'une ...lule à isolement dans l'air ne peuvent être réduites en ...a de certaines valeurs qui paraissent élevées, car les dis-...ces d'isolement dans l'air des pièces sous tension entre ...ses et par rapport à la masse se trouvent multipliées en ...son de l'association de plusieurs organes élémentaires à ...ction unique.

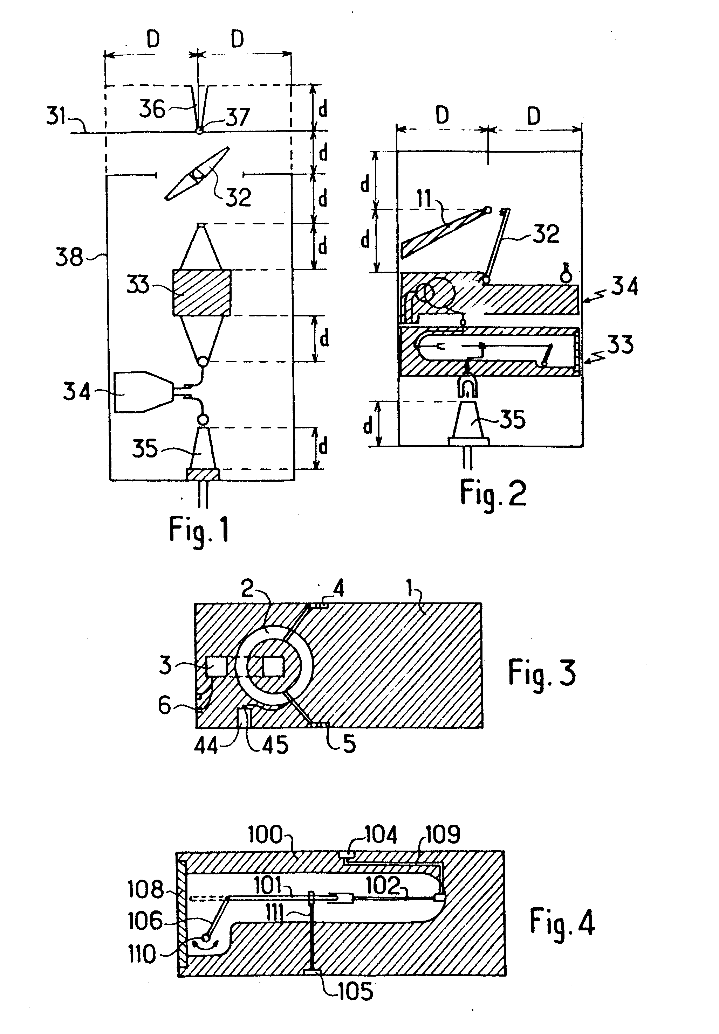

...figure 1 des dessins joints au présent mémoire a une phase ...n jeu de barres 31 supporté par un isolateur support 36 ...dont un point de contact 37 peut être relié à un disjonc-...r 33 par un sectionneur rotatif 32. Le disjoncteur 33 est ...ié à la tête de câble 35 par l'intermédiaire d'un transfor-...eur de courant 34. "d" est la distance d'isolement dans ...ir, requise pour la tension de service considérée et on ...rouve cette distance "d" entre les différents éléments qui ...vent être isolés. La cellule représentée est constituée ...r une carcasse parallélépipèdique qui est ouverte sur un ...é, ou face verticale, permettant l'accès aux différents ...anes et à la commande de ceux-ci. Généralement, le jeu de

barres 31 est sur le dessus et le départ dans la tête de câble 35 est en dessous. La distance "D" entre le point de contact 37 et les parois latérales 38 de la carcasse parallélépipèdique est évidemment supérieure à la distance "d".

On peut citer aussi le brevet français 2 242 794 (MERLIN GERIN) qui est une combinaison de dispositions connues où tous les éléments sont fixes et non démontables sous tension (en respectant les règles usuelles de sécurité et sans se préoccuper de la continuité du service. Ce brevet décrit un disjoncteur dont l'axe de chacun des pôles (tiges de contact) est perpendiculaire à la façade de la cellule, ce qui rend impossible l'extraction d'un ensemble polyphasé.

Le brevet allemand 2 337 802 (SIEMENS) prévoit un module qui porte des contacts embrochables sur des contacts situés à poste fixe dans la cellule, afin de réunir chacune des deux sorties d'un pôle de disjoncteur respectivement à l'une des barres du jeu de barres, et à l'une des barres primaires d'un transformateur de courant interposé entre le disjoncteur et le départ. Les axes des pôles de coupure (tige de contact) sont perpendiculaires à la façade de la cellule, ce qui ne permet pas les commandes simples en façade. Le module portant les pôles n'assure pas une fonction complète puisqu'il ne contient pas la commande mécanique et que celle-ci ne peut pas être réparée sans une longue interruption du service. La sécurité (impossibilité d'atteindre les pièces sous tension avec la main ou avec une tige conductrice) n'est pas assurée pendant la période au cours de laquelle on a extrait le module portant les pôles du disjoncteur et où l'on réintroduit à sa place le module factice isolant.

présente invention a pour but d'éliminer les inconvénients des dispositifs existants précités en réduisant essentiellement les dimensions et en améliorant l'accessibilité et la facilité d'entretien.

Exposé de l'invention.

Les cellules de l'invention sont caractérisées essentiellement par le fait :

que les parois de l'espace prismatique comportent à poste fixe

- des éléments-support mécaniques,

- des éléments isolants électriquement,

- des éléments conducteurs de courant entrant et de courant sortant,

- des éléments conducteurs de mise à la masse ou à la terre, ces deux derniers éléments conducteurs étant reliés à des contacts ou bornes susceptibles d'être couplés, en général, dans une zone axiale de l'espace prismatique, la plus éloignée possible des parois latérales,

que l'on prévoit d'introduire ou d'extraire par translation dans l'espace prismatique, côté ouvert, perpendiculairement à l'axe dudit espace, alors qu'au moins l'un des éléments conducteurs de courant entrant ou sortant se trouve sous tension, des blocs mobiles isolants de fonction qui séparent ledit espace prismatique en au moins deux espaces, lesdits blocs de fonction

- constituant des cloisons infranchissables,

- par des corps physiques, solides, liquides ou gazeux

- par des arcs électriques partant de parties nues de pièces sous tension

2) comprenant, chacun noyé dans une matière isolante, un ou plusieurs appareils réalisant chacun une des fonctions définies ci-dessus avec les bornes principales d'entrée et de sortie de courant disposées dans la partie médiane la plus éloignée des parties latérales de la cellule ou espace prismatique

3) présentant sur la partie avant, accessible, ou "façade" des manettes

- de commande de la fonction ou des fonctions de l'appareillage contenu dans le bloc,

- de la séparation électrique de l'appareillage du bloc par rapport aux éléments conducteurs d'un bloc adjacent et de sa mise à la masse

- des verrouillages de sécurité,

4) présentant sur leurs faces perpendiculaires aux parois latérales de la cellule,

- les bornes électriques dont il a été déjà fait mention en a)

- ainsi que celles relatives aux mesures et à la mise à la masse,

lesdites bornes étant susceptibles de s'embrocher, respectivement de se débrocher, simultanément automatiquement lors du mouvement d'introduction ou de retrait des blocs isolants, des glissières étant prévues de part et d'autre des blocs isolants de fonction pour pouvoir y glisser des cloisons de protection conductrices et mises à la masse permettant l'extraction, respectivement l'introduction, en toute sécurité du bloc isolant de fonction.

Suivant une première forme de réalisation, l'une des phases du bloc isolant de fonction comporte un bras à sectionneur

...atif connecté à la borne relative au centre de cette face, ...dit bras tournant autour d'un axe parallèle à ladite face ... perpendiculaire à la façade à partir de laquelle il peut ...re actionné par une manette en étant susceptible d'occuper ...ux positions extrêmes :

— l'une de fermeture, où ledit bras est perpendiculaire à ... face et où son extrémité s'emboite sur un contact fixe, ...rmant ainsi le circuit électrique avec la borne embrochée ... l'autre face et faisant réaliser au bloc la fonction pour ...quelle il est prévu,

— l'autre d'ouverture, où ledit bras est parallèle à la face ... une distance suffisante du contact fixe pour un isolement ... électrique convenable dans l'air.

... contact fixe coopérant avec l'extrémité du bras, est situé ...ns la partie axiale de l'espace prismatique et il est mainte-... par un support ayant la forme d'une console ancrée dans ... paroi de l'espace prismatique, ladite paroi et ledit support ...intenant et isolant un conducteur sous tension. Ce support ...ut contenir un condensateur diviseur de tension.

...ivant une autre forme préférée de réalisation, en position ... ouverture, où le bras est parallèle à la face du bloc isolant ... fonction, l'extrémité de ce bras s'embroche sur un contact ...xé à la paroi de l'espace prismatique et relié à la masse ... terre réalisant ainsi la mise à la masse ou à la terre d'un ...pareillage relié à la borne du centre de la face du bloc ...olant de fonction.

... contact fixé à la paroi de l'espace prismatique et relié ... la masse peut être avantageusement situé à l'extrémité d'un deuxième bras oscillant autour d'un axe parallèle à l'axe de commande de l'autre axe de commande du premier bras et susceptible ainsi de rendre possible ou non le contact entre les deux bras suivant la position d'une autre manette de commande située sur la façade du bloc et actionnant ledit second axe.

La liaison électrique entre les bras et l'appareillage peut être réalisée soit par tresse souple soit par un contact glissant entre un secteur circulaire coaxial à l'axe d'oscillation du bras et une pince fixe d'embrochage à doigts.

Ce qui vient d'être décrit concerne un appareillage destiné à une barre. Très souvent, on aura affaire à un courant polyphasé, généralement un courant triphasé.

Dans ce cas, on accole autant de blocs monophasés ayant la même fonction qu'il est nécessaire, de façon à les placer côte à côte dans un ensemble solidaire avec leurs faces présentant des bornes dans un même plan et leurs axes de commande de bras étant communs pour actionner lesdits bras simultanément, étant entendu alors que pour parfaire l'isolation électrique, on prévoit des axes en matière isolante, et on prévoit sur les axes, entre chaque bloc, des écrans de dimension appropriés.

Ces blocs accolés sont généralement moulés en une seule pièce.

Pour empêcher l'extraction du bloc correspondant lorsque son appareillage est sous tension, on prévoit au moins un loquet de verrouillage calé sur l'axe de commande des bras du sectionneur principal, ledit loquet coopérant avec un élément fixe solidaire de l'espace prismatique. Ce loquet de verrouillage peut être remplacé par la forme des écrans d'isolement calés sur l'axe isolant du bras sectionneur, lesdits écrans ayant
une plus grande dimension dans le même sens que les bras et
une plus petite dimension dans le sens perpendiculaire de façon
que cette dimension permette l'extraction du bloc.

En fait, les différents blocs sont disposés dans un châssis
ou tiroir sur la façade duquel sont disposés :

a) des leviers de commande des axes d'actionnement des bras
de sectionneurs et autres éléments mobiles contenus dans
le bloc,

b) les schémas synoptiques,

c) les verrouillages,

d) des lucarnes transparentes permettant l'observation depuis
l'extérieur.

L'axe du sectionneur de mise à la terre est réalisé en matière
isolante par moulage et incorpore des conducteurs relatifs
à chacune des phases et isolés les uns les autres qui sortent
sur la "façade" au niveau de la manette avec des moyens permettant

- soit de les relier chacun séparément à la terre,

- soit de les relier chacun séparément à un transformateur
d'essai afin de faire circuler un courant de test à travers
l'appareillage contenu dans le bloc.

Les bornes de la face opposée à celle comportant les bras sont
décalées chacune dans le sens perpendiculaire au sens d'extraction du "tiroir" de même que les bornes avec lesquelles elles
entrent mutuellement en contact pour éviter toute interférence
et tout blocage lors de l'extraction et de l'introduction du
"tiroir".

- 9 -  0002398

Certaines cellules contiennent un transformateur de mesure de courant noyé dans un bloc isolant dont le primaire est relié à deux bornes principales sur les faces perpendiculaires aux parois latérales de la cellule

- l'une liée électriquement au bras oscillant central,

- l'autre liée à la borne principale médiane de la face opposée, et dont le secondaire est relié à deux bornes sur l'une desdites faces situées au voisinage de la paroi latérale de la cellule à un endroit où ladite paroi est à la masse et à une distance suffisante des bornes du primaire. Le bloc isolant présente, parfois, sur une de ses faces perpendiculaire aux parois latérales de la cellule, à une distance suffisante de cette paroi latérale, une cavité avec une borne reliée à l'une des bornes principales, ladite cavité étant destinée à recevoir une extrémité d'un fusible haute tension dont l'autre extrémité est reliée à l'une des bornes haute tension d'un transformateur de mesure de tension. Les bornes basse tension du transformateur de courant sont reliées par des connexions souples à des prises sur les parois latérales de la cellule. Elles peuvent être aussi reliées aux bornes par des prises embrochables par le mouvement d'introduction du bloc isolant.

Des boîtes d'essai peuvent être montées sur la face avant du bloc isolant du tiroir et elles sont reliées aux enroulements secondaires du transformateur de courant.

Suivant une forme particulière de réalisation, les enroulements primaires de chaque face sont parallèles à la face avant façade du bloc isolant du tiroir et chaque circuit magnétique peut être perpendiculaire à l'axe de l'espace prismatique.

Le transformateur de courant peut être soit du type à enroulement primaire bobiné, soit du type à enroulement primaire monoconducteur.

Suivant une forme particulière de réalisation, un écran métallique est incorporé dans le transformateur, contre le secondaire, pour constituer un condensateur diviseur de tension.

Outre les blocs avec transformateurs, les cellules de distribution de l'invention peuvent contenir des blocs avec appareil de coupure. Dans l'état actuel de la technique on utilisera un appareil de coupure dans le gaz dont l'enveloppe est constituée par une pièce isolante moulée. Cet appareil de coupure peut être du type à tige de contact mobile qui se déplace longitudinalement pour soit appuyer son extrémité sur un contact fixe,

soit s'en éloigner,

un levier oscillant dont l'extrémité mobile s'articule sur la tige et dont l'autre extrémité est solidaire d'un axe oscillant relié à un dispositif de manoeuvre, permettant de déplacer la tige et d'assurer le contact ou la coupure. Naturellement les cellules peuvent combiner des ensembles de blocs avec transformateur et de blocs avec appareil de coupure.

## Avantages.

La préfabrication en usine de cellules modulaires standardisées, juxtaposées sur le site suivant un schéma propre à chaque installation, entraîne une simplification considérable dans la réalisation des postes, donc une réduction substantielle du prix et de l'occupation de l'espace. Plus précisément, l'invention définie ci-dessus, permet :

0002398

1) de réduire le volume général d'une cellule en donnant à certains organes, transformateurs de courant, disjoncteur, etc..., la forme d'une cloison isolante physiquement étanche,

2) de réduire le volume général d'une cellule en associant convenablement deux ou plusieurs fonctions dans un appareil unique,

3) de pousser au maximum la standardisation en introduisant la composition modulaire dans la constitution d'une cellule élémentaire, laquelle prend alors la forme d'une baie d'électronique à tiroirs embrochables de même largeur et de hauteur normalisée, appelés "racks", rassemblant chacun une ou plusieurs fonctions associées dans un appareil de forme adéquate.

Avec l'invention on peut réaliser industriellement et économiquement, par moulage, des appareils combinant des pièces conductrices, des enroulements de transformateur de mesure ou de puissance, des chambres de coupure et des parties mobiles de sectionneur englobés dans une masse isolante présentant une forme géométrique définie avec précision, qui est stable et solide. Il en résulte des conséquences importantes si on veut envisager le montage d'appareillages compliqués, outre-mer, avec une main d'oeuvre plus ou moins qualifiée parmi lesquelles on peut citer :

- la fabrication industrielle standardisée et économique des sous-ensembles ;

- l'étude préalable des postes qui est réduite et simple, donc économique et réalisable sur place par des spécialistes peu qualifiés ;

- un volume et un poids des sous-ensembles réduits, donc avec coût d'emballage et de transport à grande distance réduit ;

- une standardisation des sous-ensembles, donc une possibilité
d'envisager raisonnablement un stockage là où se trouvent les
marchés ;

- un montage sur le site aisé par une main d'oeuvre peu qualifiée ;

- en cours d'exploitation, un entretien simplifié, un contrôle
aisé, une sécurité accrue et une possibilité de dépannage immédiat par échanges de sous-ensembles.

Les appareils de l'invention ont en outre l'avantage de regrouper notamment les fonctions suivantes, pour des installations
de 3 à 40 KV :

1 groupage de transformateurs de courant à un ou plusieurs
rapports de transformation, à un ou plusieurs noyaux ;

2 le démontage par extraction du transformateur de courant
et du sectionneur sans interruption du service des autres cellules ;

3 d'incorporer des boîtes d'essai des circuits secondaires
des transformateurs de courant ;

- d'incorporer un condensateur-diviseur de tension et une
signalisation de présence de tension ;

5 d'incorporer un sectionneur de ligne ou de câble de 400
à 2000 A à commande manuelle ou électrique, avec contrôle et
signalisation de position ;

6 d'incorporer une mise à la terre du circuit ligne ou barre
en position "ouvert" des sectionneurs avec plein pouvoir de
fermeture ;

7 d'incorporer un support du contact fixe du sectionneur pouvant supporter le conducteur correspondant du jeu de barres ;

8 d'incorporer une prise de raccordement des câbles, clas-

sique ou en caoutchouc ;

9) de rendre embrochable le disjoncteur, l'interrupteur, le contacteur, les fusibles, le transformateur de courant, le sectionneur, etc... ;

10) d'incorporer un coupe circuit de protection du transformateur de tension ;

11) de réaliser une barrière de sécurité permettant l'accès aux compartiments appareillage/barres/câbles ;

12) de permettre les essais des câbles de ligne en sécurité de la terre, sans déplacement de l'appareillage et sans ouverture de la cellule.

L'invention sera mieux comprise à l'aide de la description ci-après qui en donne un exemple non limitatif et qui est illustré par les dessins joints.

Brève description des figures.

La figure 1 est une vue schématique d'une cellule classique comprenant un sectionneur rotatif, un disjoncteur et un transformateur de mesure de courant.

La figure 2 est un schéma d'une cellule suivant l'invention, possédant les mêmes appareillages ayant les mêmes fonctions que la cellule de la figure 1.

La figure 3 est une coupe verticale schématique d'un bloc transformateur de mesure de courant avec prise pour la mesure de la tension et alvéole pour y placer un fusible de raccordement au transformateur de tension.

La figure 4 est une coupe transversale verticale d'un bloc d'un appareil de coupure, plus précisément un disjoncteur dans une atmosphère d'hexafluorure de soufre.

La figure 5 est une coupe verticale d'un bloc avec transformateur de mesure, comme celui de la figure 3, incorporant aussi un sectionneur.

La figure 6 est une coupe d'un bloc similaire à celui représenté à la figure 5.

La figure 7 est une coupe verticale schématique d'un bloc similaire à celui de la figure 4 mais incorporant en plus un sectionneur.

La figure 8 est une vue de dessous d'une combinaison de trois blocs associés dans un système triphasé montrant le décalage des contacts embrochables permettant l'extraction.

La figure 9 est une vue en perspective d'un bloc rassemblant le dispositif de la figure 5 dans lequel on a démonté le bras oscillant ainsi que son arbre de commande.

La figure 10 est une vue de dessus d'un ensemble de trois blocs des figures 5, 6 ou 10 pour un dispositif triphasé.

La figure 11 est une vue en perspective schématique d'un transformateur de mesure où l'enroulement primaire est parallèle à la façade du bloc isolant, si bien que le circuit magnétique est perpendiculaire à l'axe de l'espace prismatique ; l'enroulement primaire est bobiné et un écran métallique est incorporé contre le secondaire pour constituer un condensateur diviseur de tension.

La figure 12 est une vue en perspective schématique d'un bloc transformateur de courant à enroulement primaire monoconducteur à un seul passage.

Description de quelques modes de réalisation de l'invention.

Dans l'exemple choisi (figure 2), la cellule se compose d'un transformateur de courant 34, suivi d'un disjoncteur 33, lui- même branché sur la tête de câble 35. Le transformateur 34 comprend son sectionneur rotatif 32 qui se branche sur l'isolateur support 11 relié à la connexion 37 non représentée à la figure 2.

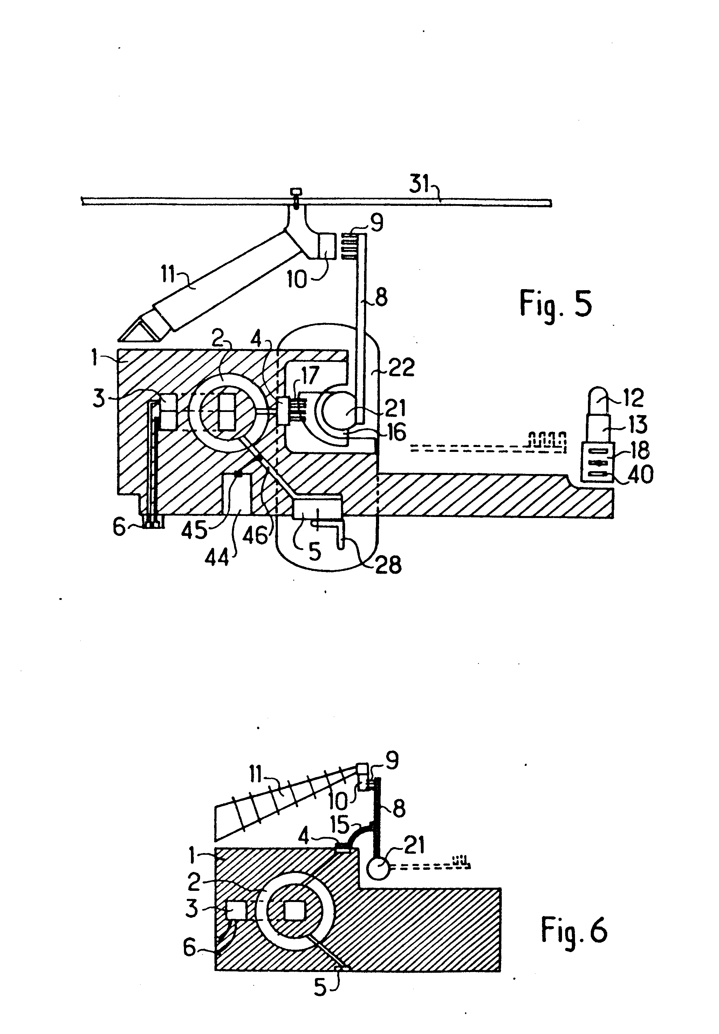

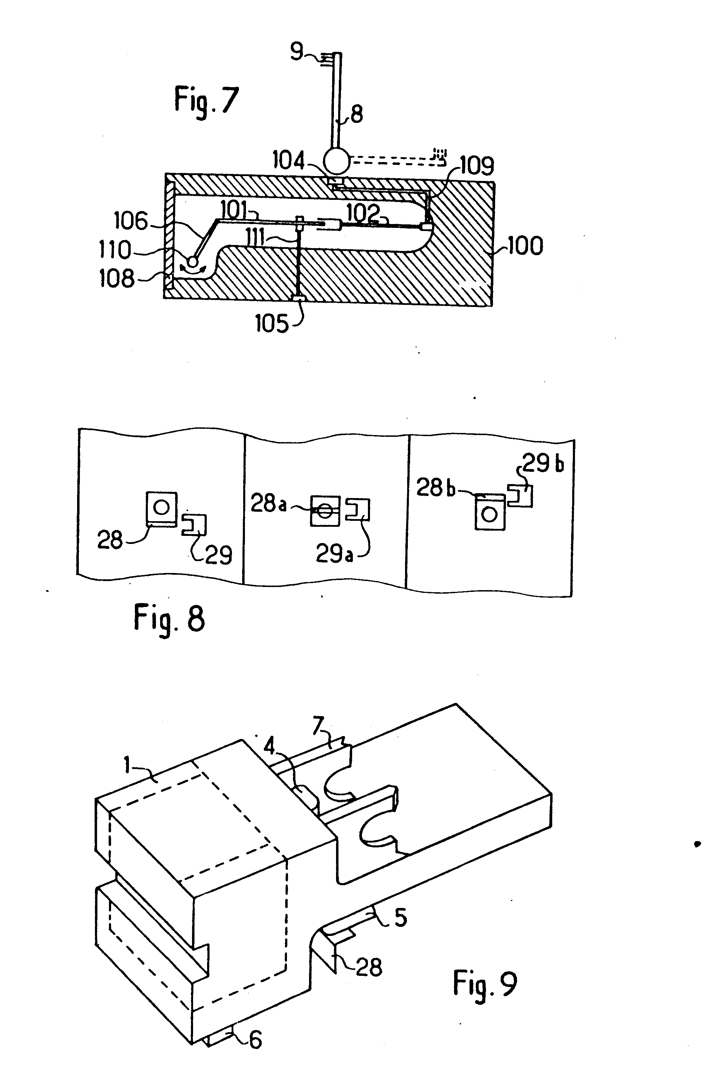

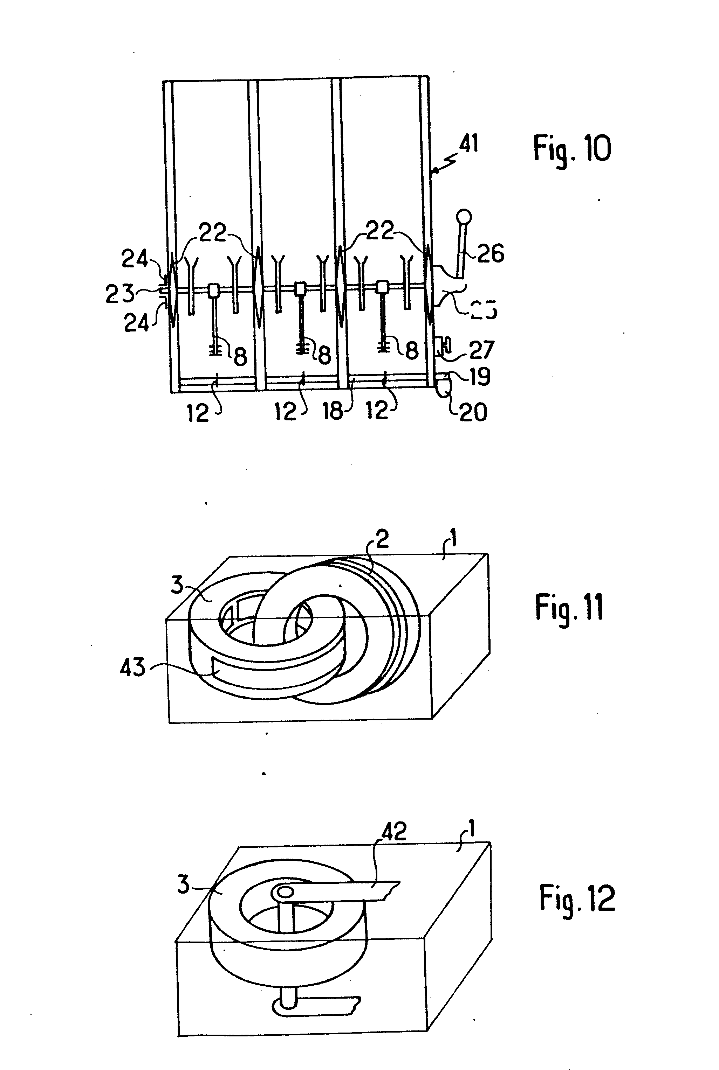

En se référant aux figures 3, 5, 6, 9, 10, 11 et 12, on considère un transformateur de courant 34 isolé dans une masse de matière isolante 1 de résine synthétique, moulée, dont les parties actives sont usuelles et comprennent notamment un enroulement primaire 2, comprenant plusieurs spires ou un seul passage (figure 12), et un ou plusieurs noyaux 3 formés chacun d'un circuit magnétique fermé sur lequel est enroulé un bobinage secondaire dont les extrémités sont réunies aux bornes 6. La forme générale du transformateur 34 est celle d'un pavé parallèlépipèdique comportant les sorties 4 et 5 de l'enroulement primaire 2 dans la région centrale des deux faces parallèles horizontales supérieure et inférieure. Sur deux autres faces parallèles à la façade, l'appareil porte des cloisons isolantes 7 (figure 9) munies d'échancrures laissant passer l'arbre 21 portant au moins un bras sectionneur rotatif 8 à l'extrémité duquel se trouve une pince d'embrochage linéaire 9. L'autre extrémité du bras conducteur 8 comporte un moyen conducteur de courant à la borne 4 qui est soit une tresse 15 souple (figure 6), soit un secteur conducteur 16 (figure 5) se déplaçant à l'intérieur d'une pince d'embrochage linéaire 17 solidaire de la borne 4 de l'enroulement primaire 2.

On prévoit, solidaire de la carcasse 38 de la cellule, un arbre 18 l'un deuxième sectionneur rotatif, dit de "terre", parallèle au premier et qui se trouve au voisinage d'une paroi à la masse ou à la terre et porte un bras 13 solidaire d'un cou-

...eau 10 pouvant s'engager, par rotation dans la pince d'embro-
...ge 9 du bras 8 sectionneur de ligne quand celui-ci est en
...sition "ouvert". Chaque couteau 12 du sectionneur de terre
... relié à un conducteur 40 noyé dans la résine isolante cons-
...tituant l'arbre 18 de ce sectionneur et débouchant de la face
...avant ou façade de la cellule par un contact 19 (figure 10).
...Celui-ci peut être, à volonté, soit relié à la masse ou à la
...terre par une tresse conductrice 20 portant une pince d'embro-
...chage, soit relié à un générateur d'essai par une connexion
...appropriée.

...L'arbre 21 du sectionneur de ligne, moulé en résine synthétique
...isolante, reçoit les bras conducteur 8 dont la section dépend
...du courant nominal du sectionneur. Des écrans isolants en forme
...de secteur circulaire 22 (figure 5) sont aussi calés sur l'arbre
...21 et complètent l'isolement entre les phases et entre chaque
...phase et la masse. Un carré 23, solidaire de l'arbre 21, est
...serré entre deux lames de ressort 24 (figure 10) assurant ainsi
...l'immobilisation dudit carré et de son arbre 21 dans deux po-
...sitions perpendiculaires après actionnement par un moyeu de
...commande 25 muni d'un levier 26 et de deux serrures 27 permet-
...tant de verrouiller le moyeu 25 dans les deux positions perpen-
...diculaires "ouvert" et "fermé" (figure 10).

...La borne de sortie 5 du primaire du transformateur de courant
...est connectée à un doigt d'embrochage 28 (figure 5) ou encore
...28a, 28b (figure 8) recevant la pince d'embrochage 29 ou encore
...29a, 29b dans l'appareil de coupure. Les doigts 28, 28a, 28b
...et les pinces 29, 29a, 29b correspondant à chacune des faces
...se trouvent décalés latéralement les uns par rapport aux autres
...afin de permettre l'extraction de l'appareil par translation

d'ensemble du bloc comportant les trois transformateurs et les trois sectionneurs.

On remarque en outre que des enroulements primaires 2 des transformateurs sont disposés parallèlement entre eux et à la façade 41 de chaque bloc ou groupe de bloc 1. Ceci a l'avantage de réduire les contraintes diélectriques et les phénomènes d'effluves dans l'air. Par la même occasion le ou les circuits magnétiques sont disposés parallèlement à une base du bloc ce qui a pour effet de constituer un écran au potentiel de la terre entre les deux côtés dudit bloc (figures 11 et 12).

A la figure 12 on a représenté une constitution originale du transformateur de courant du type à enroulement primaire 42 monoconducteur alors qu'à la figure 11, il y avait un primaire 2 bobiné, c'est-à-dire à plusieurs passages.

A la figure 11, on remarque qu'on a incorporé contre le secondaire 3 un écran 43 qui constitue un condensateur diviseur de tension entre les deux enroulements, ce diviseur de tension étant utile pour contrôler la présence de tension avec une petite lampe néon ou en effectuer la mesure.

Dans certains cas, le bloc isolant 1 présente, sur sa face inférieure, suffisamment loin des parois de la cellule, une cavité 44 (figure 3 et figure 5) destinée à recevoir un fusible haute tension intercalé entre une borne 45 au fond de ladite cavité 44, ladite borne étant reliée à la liaison 46 entre le primaire 2 et la borne 5, et l'une des bornes haute tension d'un transformateur de mesure de tension que l'on y adapte pour effectuer la mesure.

- 18 -    0002398

Les bornes basse tension 6 du transformateur de courant peuvent être reliées par des connexions souples non représentées, à des prises sur des parois latérales de la cellule. On peut aussi imaginer de les relier à ces parois par des prises embrochables au moment de l'introduction du bloc dans la carcasse 38 ; ces dispositifs ne sont pas représentés.

Les cellules de distribution de l'invention peuvent contenir aussi des blocs avec appareils de coupure (figure 4 et figure 7) dont l'enveloppe 100 est constituée par une pièce isolante moulée fermée par un opercule 108 et contenant de l'hexafluorure de soufre. Cette enveloppe 100 comporte une borne d'entrée 104 reliée à un bras 8 et à un conducteur 109 connecté à un contact fixe 102 à l'intérieur de la cavité contenant le gaz ($SF_6$). Dans l'axe du contact fixe 102 peut se déplacer une tige de contact mobile 101 actionnée par une commande mécanique à levier oscillant 106 relié à un arbre 110 susceptible d'être actionné de l'extérieur. La tige 101 est supportée par un guide 111 qui sert de liaison à l'autre borne 105 du bloc. Suivant l'oscillation du levier 106, la tige 101 peut être rapprochée contre le contact fixe 2, ce qui assure la liaison électrique, soit peut s'en éloigner, ce qui provoque la disjonction.

- 1 -

0002398

Revendications de brevet.

1°/ Perfectionnements aux cellules de distribution de courant haute tension à partir d'un jeu de barres et comportant divers appareils propres aux cellules, notamment des transformateurs de mesure de courant et de tension, un sectionneur, un appareil de coupure, en particulier un disjoncteur ou un interrupteur ou un contacteur à coupure dans un gaz, chacun de ces appareils réalisant une fonction complète déterminée, lesdites cellules étant constituées dans un espace prismatique susceptible d'être ouvert sur un côté et où le courant transite perpendiculairement aux bases c a r a c t é r i s é s par le fait

a) que les parois de l'espace prismatique comportent à poste fixe

- des éléments-support mécaniques,
- des éléments isolants électriquement,
- des éléments conducteurs de courant entrant et de courant sortant,
- des éléments conducteurs de mise à la masse ou à la terre, ces deux derniers éléments conducteurs étant reliés à des contacts ou bornes susceptibles d'être couplés, en général, dans une zone axiale de l'espace prismatique, la plus éloignée possible des parois latérales,

b) que l'on prévoit d'introduire ou d'extraire par translation dans l'espace prismatique, coté ouvert, perpendiculairement à l'axe dudit espace, alors qu'au moins l'un des éléments conducteur de courant entrant ou sortant se trouve sous tension, des blocs mobiles isolants de fonction qui séparent ledit espace prismatique en au moins deux espaces, lesdits blocs de fonction

1) constituant des cloisons infranchissables,

- par des corps physiques, solides, liquides ou gazeux

- par des arcs électriques partant de parties nues de pièces sous tension

2) comprenant chacun noyé dans une matière isolante, un ou plusieurs appareils réalisant chacun une des fonctions définies ci-dessus avec les bornes principales d'entrée et de sortie de courant disposées dans la partie médiane la plus éloignée des parties latérales de la cellule ou espace prismatique

3) présentant sur la partie avant, accessible, ou "façade" des manettes

- de commande de la fonction ou des fonctions de l'appareillage contenu dans le bloc,

- de la séparation électrique de l'appareillage du bloc par rapport aux éléments conducteurs d'un bloc adjacent et de sa mise à la masse,

- des verrouillages de sécurité,

4) présentant sur leurs faces perpendiculaires aux parois latérales de la cellule,

- les bornes électriques dont il a été déjà fait mention en a)

- ainsi que celles relatives aux mesures et à la mise à la masse, lesdites bornes étant susceptibles de s'embrocher, respectivement de se débrocher, simultanément automatiquement lors du mouvement d'introduction ou de retrait des blocs isolants, des glissières étant prévues de part et d'autre des blocs isolants de fonction pour pouvoir y glisser des cloisons de protection conductrices et mise à la masse permettant l'extraction, respectivement l'introduction, en toute sécurité du bloc isolant de fonction.

- 3 -

0002398

2°/ Cellules de distribution, telles que définies dans la revendication 1, c a r a c t é r i s é e s par le fait qu'une des faces du bloc isolant de fonction comporte un bras à sectionneur rotatif connecté à la borne relative au centre de cette face, ledit bras tournant autour d'un axe parallèle à ladite face et perpendiculaire à la façade à partir de laquelle il peut être actionné par une manette en étant susceptible d'occuper deux positions extrêmes :

a) l'une de fermeture, où ledit bras est perpendiculaire à la face et où son extrémité s'emboîte sur un contact fixe, fermant ainsi le circuit électrique avec la borne embrochée de l'autre face et faisant réaliser au bloc la fonction pour laquelle il est prévu,

b) l'autre d'ouverture, où ledit bras est parallèle à la face à une distance suffisante du contact fixe pour un isolement diélectrique convenable dans l'air.

3°/ Cellules, telles que définies dans la revendication 2, c a r a c t é r i s é e s par le fait que le contact fixe, coopérant avec l'extrémité du bras, est situé dans la partie axiale de l'espace prismatique et qu'il est maintenu par un support ayant la forme d'une console ancrée dans la paroi de l'espace prismatique, ladite paroi et ledit support contenant et isolant un conducteur sous tension.

4°/ Cellules, telles que définies dans la revendication 3, c a r a c t é r i s é e s par le fait que le support contient un condensateur diviseur de tension.

5°/ Cellules, telles que définies dans l'une quelconque des

- 4 -

0002398

revendication 2, 3 ou 4, prise isolément, c a r a c t é r i s é e s par le fait qu'en position d'ouverture, où le bras est parallèle à la face du bloc isolant de fonction, l'extrémité dudit bras s'embroche sur un contact fixé à la paroi de l'espace prismatique et relié à la masse ou terre réalisant ainsi la mise à la masse ou à la terre d'un appareillage relié à la borne du centre de la face du bloc isolant de fonction.

6°/ Cellules, telles que définies dans la revendication 5, c a r a c t é r i s é e s par le fait que le contact fixé à la paroi de l'espace prismatique et relié à la masse est situé à l'extrémité d'un deuxième bras oscillant autour d'un axe parallèle à l'axe de commande de l'autre axe de commande du premier bras et susceptible ainsi de rendre possible ou non le contact entre les deux bras suivant la position d'une autre manette de commande située sur la façade du bloc et actionnant ledit second axe.

7°/ Cellules, telles que définies dans l'une quelconque des revendications 2, 3, 4, 5 ou 6, prise isolément, c a r a c t é r i s é e s par le fait la liaison électrique entre les bras et l'appareillage est réalisée par tresse souple.

8°/ Cellules, telles que définies dans l'une ou l'autre des revendications 2, 3, 4, 5, 6, prise isolément, c a r a c t é r i s é e s par le fait que liaison électrique entre les bras et l'appareillage est réalisée par un contact glissant entre un secteur circulaire coaxial à l'axe d'oscillation du bras et une pince fixe d'embrochage à doigts.

9°/ Cellules, telles que définies dans l'une ou l'autre des revendications 1 à 8, prise isolément, c a r a c t é r i s é e s par le fait que, pour son adaptation à des courants polyphasés, on accole autant de blocs monophasés ayant la même fonction qu'il est nécessaire, de façon à les placer côte à côte dans un ensemble solidaire avec leurs faces présentant des bornes dans un même plan et leurs axes de commande de bras étant communs pour actionner lesdits bras simultanément, étant entendu alors que pour parfaire l'isolation électrique,

a) on prévoit des axes en matière isolante,

b) on prévoit sur les axes, entre chaque bloc, des écrans de dimensions appropriés.

10°/ Cellules, telles que définies dans la revendication 9, c a r a c t é r i s é e s par le fait que les blocs accolés sont moulés en une seule pièce.

11°/ Cellules, telles que définies dans l'une ou l'autre des revendications 9 ou 10, prise isolément, c a r a c t é r i s é e s par le fait qu'au moins un loquet de verrouillage est calé sur l'axe de commande des bras du sectionneur principal, ledit loquet coopérant avec un élément fixe solidaire de la paroi de l'espace prismatique, pour empêcher l'extraction du bloc correspondant lorsque son appareillage est sous tension.

12°/ Cellules, telles que définies dans la revendication 11, c a r a c t é r i s é e s par le fait que le loquet de verrouillage est remplacé par la forme des écrans d'isolement calés sur l'axe isolant du bras sectionneur, lesdits écrans ayant une plus grande dimension dans le même sens que les bras et une plus petite dimension dans le sens perpendiculaire de façon que cette dimension permette l'extraction du bloc.

13°/ Cellules, telles que définies dans l'une ou l'autre des revendications 9, 10, 11, 12, prise isolément, c a r a c t é
r i s é e s par le fait que les différents blocs sont disposés
dans un châssis ou tiroir sur la façade duquel sont disposés :

a) les leviers de commande des axes d'actionnement des bras
de sectionneur et autres éléments mobiles contenus dans le
bloc,

b) les schémas synoptiques,

c) les verrouillages,

d) des lucarnes transparentes permettant l'observation depuis
l'extérieur.

14°/ Cellules, telles que définies dans l'une ou l'autre des
revendications 9, 10, 11, 12, 13, prise isolément, c a r a c
t é r i s é e s par le fait que l'axe du sectionneur de mise
à la terre est réalisé en matière isolante par moulage et incorpore des conducteurs relatifs à chacune des phases et isolés
les uns les autres qui sortent sur la "façade" au niveau de
la manette avec des moyens permettant

- soit de les relier chacun séparément à la terre,

- soit de les relier chacun séparément à un transformateur
d'essai afin de faire circuler un courant de test à travers
l'appareillage contenu dans le bloc.

15°/ Cellules, telles que définies dans l'une ou l'autre des
revendications 9, 10, 11, 12, 13 ou 14, prise isolément,
c a r a c t é r i s é e s par le fait que les bornes de la
face opposée à celle comportant les bras sont décalées chacune
dans le sens perpendiculaire au sens d'extraction du "tiroir
de même que les bornes avec lesquelles elles entrent mutuellement en contact pour éviter toute interférence et tout bloc ge
lors de l'extraction et de l'introduction du "tiroir".

16°/ Cellules de distribution, telles que définies dans l'une ou l'autre des revendications 1 à 15, prise isolément, c a r a c t é r i s é e s par le fait qu'elles contiennent un transformateur de mesure de courant noyé dans un bloc isolant dont le primaire est relié à deux bornes principales sur les faces perpendiculaires aux parois latérales de la cellule

- l'une liée électriquement au bras oscillant central,

- l'autre liée à la borne principale médiane de la face opposée, et dont le secondaire est relié à deux bornes sur l'une desdites faces situées au voisinage de la paroi latérale de la cellule à un endroit où ladite paroi est à la masse et à une distance suffisante des bornes du primaire.

17°/ Cellules de distribution, telles que définies dans la revendication 16, c a r a c t é r i s é e s par le fait que le bloc isolant présente, sur une de ses faces perpendiculaires aux parois latérales de la cellule, à distance suffisante de cette paroi latérale, une cavité avec une borne reliée à l'une des bornes principales, ladite cavité étant destinée à recevoir un fusible haute tension relié d'autre part à l'une des bornes haute tension d'un transformateur de mesure de tension.

18°/ Cellules de distribution, telles que définies dans l'une ou l'autre des revendications 16 ou 17, prise isolément, c a r a c t é r i s é e s par le fait que les bornes basse tension des transformateurs de mesure sont reliées par des connexions souples à des prises sur les parois latérales de la cellule.

19°/ Cellules de distribution, telles que définies dans l'une ou l'autre des revendications 16 ou 17, prise isolément,

- 8 -

0002398

caractérisées par le fait que les bornes basse tension de transformateurs de mesure sont reliées à des bornes, sur les parois latérales de la cellule, par des prises embrochables par le mouvement d'introduction du bloc isolant.

20°/ Cellules de distribution, telles que définies dans l'une ou l'autre des revendications 16 à 19, prise isolément, c a r a c t é r i s é e s par le fait que des boîtes d'essai sont montées sur la face avant du bloc isolant ou tiroir et sont reliées aux enroulements secondaires du transformateur de courant.

21°/ Cellules de distribution, telles que définies dans l'une quelconque des revendications 16 à 20, prise isolément, c a r a c t é r i s é e s par le fait que les enroulements primaires de chaque phase sont parallèles à la face avant ou façade du bloc isolant ou tiroir.

22°/ Cellules de distribution, telles que définies dans l'une quelconque des revendications 16 à 21, prise isolément, a r a c t é r i s é e s par le fait que chaque circuit magnétique est perpendiculaire à l'axe de l'espace prismatique.

23°/ Cellules de distribution, telles que définies dans l'une quelconque des revendications 16 à 22, prise isolément, c a r a c t é r i s é e s par le fait que le transformateur de courant est du type à enroulement primaire bobiné.

24°/ Cellules de distribution, telles que définies dans l'une quelconque des revendications 16 à 22, prise isolément, c a r a c t é r i s é e s par le fait que le transformateur de courant est du type à enroulement primaire monoconducteur à un seul passage.

25°/ Cellules de distribution, telles que définies dans l'une quelconque des revendications 16 à 24, prise isolément, c a r a c t é r i s é e s par le fait qu'un écran métallique est incorporé dans le transformateur, contre le secondaire, pour constituer un condensateur diviseur de tension.

26°/ Cellules de distribution, telles que définies dans l'une ou l'autre des revendications 1 à 15, prise isolément, c a r a c t é r i s é e s par le fait qu'elles contiennent un appareil de coupure dans le gaz dont l'enveloppe est constituée par une pièce isolante moulée.

27°/ Cellules de distribution de courant, telles que définies dans la revendication 26, où l'appareil de coupure est du type à tige de contact mobile qui se déplace longitudinalement pour soit appuyer son extrémité sur un contact fixe, soit s'en éloigner, un levier oscillant dont l'extrémité mobile s'articule sur la tige et dont l'autre extrémité est solidaire d'un axe oscillant relié à un dispositif de manoeuvre, permettant de dépla- ·cer la tige et d'assurer le contact ou la coupure, c a r a c t é r i s é e s par le fait que
- la tige de contact est perpendiculaire aux parois latérales de la cellule,
- l'axe de manoeuvre est perpendiculaire à la "façade" du bloc isolant.

28°/ Cellules de distribution, telles que définies dans l'une quelconque des revendications 1 à 15, prise isolément, c a r a c t é r i s é e s par le fait qu'elles combinent, dans une même pièce moulée, un transformateur, tel que défini dans l'une des revendications 16 à 25, et un appreil dé coupure, tel que défini dans l'une des revendications 26 ou 27.

Fig. 1

Fig. 2

Fig. 3

Fig. 4

**Fig. 5**

**Fig. 6**

0002398

**Fig. 7**

**Fig. 8**

**Fig. 9**

0002398

Fig. 10

Fig. 11

Fig. 12

**Office européen des brevets**

## RAPPORT DE RECHERCHE EUROPEENNE

Numéro de la demande

EP 78 40 0163

| | DOCUMENTS CONSIDERES COMME PERTINENTS | | CLASSEMENT DE LA DEMANDE (Int. Cl.²) |
|---|---|---|---|
| **Catégorie** | Citation du document avec indication, en cas de besoin, des parties pertinentes | Revendication concernée | H 02 B 13/02 |
| D | FR - A - 2 242 794 (MERLIN GERIN)<br>* Page 4, ligne 1 à page 5, ligne 19; page 7, ligne 13 à page 8, ligne 14 *<br><br>— | 1,2 | |
| D | DE - A - 2 337 802 (SIEMENS)<br>* Pages 5-7 *<br><br>— | 1,2 | |
| D | DE - C - 977 621 (SIEMENS)<br>* Page 2, ligne 75 à page 3, ligne 37 *<br><br>———— | 1-3 | |

**DOMAINES TECHNIQUES RECHERCHES (Int. Cl.²)**

H 02 B 13/02
11/12
11/14
11/16
11/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-02-1979 | DAILLOUX |